# EUROPEAN PATENT APPLICATION

(11) **EP 4 498 750 A1**
(43) Date of publication of application: **29.01.2025**
(21) Application number: 23795313.8
(22) Date of filing: 24.04.2023
(51) Int. Cl.: H04W 74/00, H04W 24/10

(54) **RANDOM ACCESS REPORT RECORDING METHOD AND APPARATUS**

(30) Priority: 28.04.2022 CN 202210470987
(71) Applicant: Huawei Technologies Co., Ltd., Shenzhen, Guangdong 518129 (CN)
(72) Inventor: WANG, Fanfan, Shenzhen, Guangdong 518129 (CN); CHEN, Jun, Shenzhen, Guangdong 518129 (CN); GENG, Tingting, Shenzhen, Guangdong 518129 (CN)
(74) Representative: Goddar, Heinz J.
(86) International application number: PCT/CN2023/090204
(87) International publication number: WO 2023/207880

(57) **Abstract**

This application provides a random access report recording method and an apparatus, to improve an effect of optimizing a random access channel configuration. The method includes: A terminal device initiates a random access process to a cell managed by a secondary base station, to obtain a first secondary base station random access report; and the terminal device records the first secondary base station random access report when a quantity of historical secondary base station random access reports recorded by the terminal device is less than a first threshold. In this solution, a quantity of recorded secondary base station random access reports is limited, so that a problem that excessively few master base station random access reports are recorded or even no master base station random access report is recorded because excessive secondary base station random access reports are generated can be effectively avoided, and a network side device can effectively optimize a random access configuration in time.

## Description

### CROSS-REFERENCE TO RELATED APPLICATIONS

This application claims priority to Chinese Patent Application No. 202210470987.8, filed with the China National Intellectual Property Administration on April 28, 2022 and entitled "RANDOM ACCESS REPORT RECORDING METHOD AND APPARATUS", which is incorporated herein by reference in its entirety.

### TECHNICAL FIELD

This application relates to the field of communication technologies, and in particular, to a random access report recording method and an apparatus.

### BACKGROUND

In a multi-radio dual connectivity (multi-radio dual connectivity, MR-DC) communication scenario, a terminal device may keep communicating with a master base station and at least one secondary base station. To avoid a random access channel (random access channel, RACH) access failure caused by inappropriately configuring the terminal device by a network side, the terminal device records information in a RACH access process, and generates a corresponding RA report (RA report). Therefore, after accessing a network, the terminal device sends the RA report to a network side device, so that the network side device identifies a problem in the RACH access process and optimizes a RACH configuration in time, thereby increasing a RACH access success rate of user equipment.

However, if the terminal device frequently initiates a RACH access process to a cell managed by the secondary base station, excessive secondary base station random access reports are generated. Further, when the user equipment initiates a RACH access process to a cell managed by the master base station, a case in which excessively few master base station random access reports are recorded or even no master base station random access report is recorded occurs. As a result, an effect of optimizing the RACH configuration is poor.

### SUMMARY

This application provides a random access report recording method and an apparatus, to improve an effect of optimizing a random access configuration.

According to a first aspect, an embodiment of this application provides a random access report recording method. The method may be performed by a terminal device or a chip having a function similar to that of the terminal device. In the method, a terminal device initiates a random access process to a cell managed by a secondary base station, to obtain a first secondary base station random access report; and the terminal device records the first secondary base station random access report when a quantity of historical secondary base station random access reports recorded by the terminal device is less than a first threshold.

In this embodiment, the first threshold is a natural number. It may be understood that when the first threshold is 0, the terminal device skips recording the secondary base station random access report.

Based on this solution, in this embodiment of this application, a quantity of recorded secondary base station random access reports is limited, so that a problem that excessively few master base station random access reports are recorded or even no master base station random access report is recorded because excessive secondary base station random access reports are generated can be effectively avoided, and a balance is achieved between recording the master base station random access report and recording the secondary base station random access report. Therefore, a network side device can obtain appropriate quantities of master base station random access reports and secondary base station random access reports. In addition to optimizing, based on the secondary base station random access report, a related configuration of a random access process of a secondary node, a problem in a random access process of a master node can be further effectively identified in time, and corresponding random access configuration optimization can be performed.

In a possible implementation, the terminal device sends a random access report list (RA report list) to the master node, where the random access report list includes the first secondary base station random access report.

In this embodiment, the random access report list further includes one or more of the recorded secondary base station random access reports, and a total quantity of secondary base station random access reports included in the random access report list is less than or equal to the first threshold.

In addition, the random access report list may further include a master base station random access report, and a total quantity of master base station random access reports and secondary base station random access reports included in the random access report list is less than or equal to a second threshold. Alternatively, a total quantity of master base station random access reports included in the random access report list is less than or equal to a third threshold.

In this embodiment of this application, the second threshold or the third threshold may be a total quantity, predefined in an existing protocol, of random access reports that the terminal device is allowed to record.

Based on this solution, this embodiment of this application provides a form that the random access report list may include. To be specific, in this embodiment of this application, the random access report list may be divided into two parts, where a first part is for storing the secondary base station random access report, and a total quantity of secondary base station random access reports stored in the first part is less than or equal to the first threshold; and the second part is for storing the master base station random access report, and a total quantity of master base station random access reports stored in the second part is less than or equal to the third threshold. Alternatively, a total quantity of random access reports stored in the second part and the first part is less than or equal to the second threshold.

In a possible implementation, the first threshold is predefined. Alternatively, the first threshold is indicated by first indication information received by the terminal device from the network side device, where the first indication information is carried in an operation, administration and maintenance configuration message, a system message, or a radio resource control message.

In a possible implementation, the method further includes: The terminal device initiates a random access process to a cell managed by the master node, to obtain a first master base station random access report; and the terminal device deletes an earliest recorded historical secondary base station random access report, and records the first master base station random access report when a sum of the quantity of historical secondary base station random access reports and a quantity of historical master base station random access reports recorded by the terminal device is equal to the second threshold, where the second threshold is predefined.

Based on this solution, recording of a newly obtained master base station random access report can be effectively ensured.

In a possible implementation, the method further includes: The terminal device receives second indication information sent by the network side device, where the second indication information indicates the terminal device to preferentially record the master base station random access report.

Based on this solution, the terminal device may have a function of deleting the earliest recorded historical secondary base station random access report and recording the newly obtained master base station random access report, so that the recording of the newly obtained master base station random access report can be effectively ensured.

In a possible implementation, the second indication information is carried in the operation, administration and maintenance configuration message, the system message, or the radio resource control message.

In a possible implementation, the method further includes: The terminal device skips recording the first master base station random access report when the quantity of historical secondary base station random access reports is 0.

Based on this solution, in this embodiment of this application, when the terminal device obtains a new master base station random access report, and determines that a total quantity of recorded historical random access reports is equal to the second threshold, and the quantity of historical secondary base station random access reports is 0, it may be learned that all random access reports recorded by the terminal device are master base station random access reports. In this case, the terminal device may quit recording the newly obtained master base station random access report.

In a possible implementation, the method further includes: The terminal device deletes an earliest recorded historical master base station random access report, and records the first master base station random access report when the quantity of historical secondary base station random access reports is 0.

Based on this solution, time validity of the master base station random access report recorded by the terminal device can be better ensured, so that the network side device can effectively identify a problem in a random access process of the master base station in time, and perform corresponding random access configuration optimization.

In a possible implementation, the method further includes: The terminal device deletes the earliest recorded historical secondary base station random access report, and records the first secondary base station random access report when the quantity of historical secondary base station random access reports is equal to the first threshold.

Based on this solution, time validity of the secondary base station random access report recorded by the terminal device can be better ensured, so that the network side device can effectively identify a problem in a random access process of the secondary node in time, and perform corresponding random access configuration optimization.

In a possible implementation, the method further includes: The terminal device skips recording the first secondary base station random access report when the quantity of secondary base station random access reports is equal to the first threshold.

Based on this solution, in this embodiment of this application, when the terminal device obtains a new secondary base station random access report, and determines that the quantity of historical secondary base station random access reports is equal to the first threshold, the terminal device may quit recording a newly obtained secondary base station random access report.

According to a second aspect, a random access report recording method is provided. The method may be performed by a network side device or a chip having a function similar to that of the network side device. In the method, a network side device determines a first threshold, where the first threshold is a maximum quantity of secondary base station random access reports that can be recorded by a terminal device; and the network side device sends a first message to the terminal device, where the first message includes the first threshold.

The network side device may be a master base station of the terminal device, or a network management device such as an operation, administration, and maintenance (operation, administration and maintenance, OAM) device.

Based on this solution, in this embodiment of this application, the network side device indicates the maximum quantity of secondary base station random access reports that can be recorded by the terminal device, so that a problem that the terminal device records excessively few master base station random access reports or even records no master base station random access report because excessive secondary base station random access reports are generated can be effectively avoided, and a balance is achieved between recording the master base station random access report and recording the secondary base station random access report. Therefore, the network side device can obtain appropriate quantities of master base station random access reports and secondary base station random access reports. In addition to optimizing, based on the secondary base station random access report, a related configuration of a RACH access process of the secondary base station, a problem in the RACH access process of a master base station can be further effectively identified in time, and corresponding RACH configuration optimization can be performed.

In a possible implementation, when the network side device is the OAM device, the first indication information may be carried in an operation, administration and maintenance configuration message; or when the network side device is the master base station, the first indication information may be carried in a system message or a radio resource control message.

In a possible implementation, the method further includes: The network side device sends second indication information to the terminal device, where the second indication information indicates the terminal device to preferentially record the master base station random access report.

Based on this solution, the terminal device can have a function of deleting an earliest recorded historical secondary base station random access report and recording a newly obtained master base station random access report, to effectively ensure that the terminal device records the newly obtained master base station random access report, so that the network side device can effectively identify a problem in a random access process of the master base station in time, and perform corresponding random access configuration optimization.

In a possible implementation, when the network side device is the OAM device, the second indication information may be carried in the operation, administration and maintenance configuration message; or when the network side device is the master base station, the second indication information may be carried in the system message or the radio resource control message.

In a possible implementation, when the network side device is the master base station, the method further includes: The network side device receives a random access report list from the terminal device, where the random access report list includes one or more secondary base station random access reports recorded by the terminal device; and a quantity of secondary base station random access reports is less than or equal to the first threshold.

In this embodiment, the random access report list further includes one or more of the recorded secondary base station random access reports, and a total quantity of secondary base station random access reports included in the random access report list is less than or equal to the first threshold.

In addition, the random access report list may further include a master base station random access report, and a total quantity of master base station random access reports and secondary base station random access reports included in the random access report list is less than or equal to a second threshold. Alternatively, a total quantity of master base station random access reports included in the random access report list is less than or equal to a third threshold.

According to a third aspect, a communication apparatus is provided. The apparatus may include modules/units configured to perform the method in any one of the first aspect or the possible implementations of the first aspect. The apparatus may be a terminal or a chip used in the terminal.

According to a fourth aspect, a communication apparatus is provided. The apparatus may include modules/units configured to perform the method in any one of the second aspect or the possible implementations of the second aspect. The apparatus may be a network or a chip used in the network.

According to a fifth aspect, a communication apparatus is provided. The apparatus includes a processor and a memory. The memory is configured to store computer-executable instructions. When a controller runs, the processor executes the computer-executable instructions in the memory, to perform the operation steps of the method in any one of the first aspect or the possible implementations of the first aspect by using a hardware resource in the controller. The apparatus may be a terminal device or a chip used in the terminal device.

According to a sixth aspect, a communication apparatus is provided. The apparatus includes a processor and a memory. The memory is configured to store computer-executable instructions. When a controller runs, the processor executes the computer-executable instructions in the memory, to perform the operation steps of the method in any one of the second aspect or the possible implementations of the second aspect by using a hardware resource in the controller. The apparatus may be a network side device or a chip used in a network side device. The network side device may be a device in a wireless network. For example, a terminal device accesses a radio access network (radio access network, RAN) node such as a base station of a wireless network. In this application, the communication apparatus may be a master base station of the terminal device, or may be an OAM device.

According to a seventh aspect, this application provides a computer-readable storage medium. The computer-readable storage medium stores instructions. When the instructions are run on a computer, the computer is enabled to perform the methods in the foregoing aspects.

According to an eighth aspect, this application provides a computer program product that stores instructions. When the computer program product runs on a computer, the computer is enabled to perform the methods in the foregoing aspects.

In addition, for beneficial effects of the third aspect to the eighth aspect, refer to the beneficial effects shown in the first aspect and the second aspect.

### BRIEF DESCRIPTION OF DRAWINGS

FIG. 1 is a diagram of a communication architecture according to an embodiment of this application;
FIG. 2 is a diagram of an architecture of a cell according to an embodiment of this application;
FIG. 3 is a flowchart of a random access report recording method according to an embodiment of this application;
FIG. 4(a) and FIG. 4(b) are a diagram of a random access report list according to an embodiment of this application;
FIG. 5 is a schematic flowchart of a first random access report recording scenario according to an embodiment of this application;
FIG. 6 is a schematic flowchart of a second random access report recording scenario according to an embodiment of this application;
FIG. 7 is a schematic flowchart of a third random access report recording scenario according to an embodiment of this application;
FIG. 8 is a schematic flowchart of a fourth random access report recording scenario according to an embodiment of this application;
FIG. 9 is a schematic flowchart of a fifth random access report recording scenario according to an embodiment of this application;
FIG. 10 is a schematic flowchart of a sixth random access report recording scenario according to an embodiment of this application;
FIG. 11 is a schematic flowchart of a seventh random access report recording scenario according to an embodiment of this application;
FIG. 12 is a diagram of a first communication apparatus according to an embodiment of this application;
FIG. 13 is a diagram of a second communication apparatus according to an embodiment of this application; and
FIG. 14 is a diagram of a third communication apparatus according to an embodiment of this application.

### DESCRIPTION OF EMBODIMENTS

The following further describes in detail this application with reference to the accompanying drawings. A specific operation method in a method embodiment may also be applied to an apparatus embodiment or a system embodiment.

To increase a transmission rate of a terminal device, an MR-DC or multi-connectivity (multi-connectivity, MC) communication architecture may be used. MR-DC may also be referred to as dual connectivity (dual connectivity, DC) for short. To be specific, in a wireless network, one terminal device may communicate with a plurality of access network devices (for example, base stations). In the plurality of base stations connected to the terminal device, a network side device that exchanges control plane signaling with a core network may be referred to as a master base station, or referred to as a master node (Master Node, MN), and another network side device that exchanges no control plane signaling with the core network may be referred to as a secondary base station, or referred to as a secondary node (Secondary Node, SN). In this application, the MN represents the master base station connected to the terminal device, and the SN represents the secondary base station connected to the terminal device.

In a DC scenario, the terminal device may be connected to one MN and one SN. In an MC scenario, the terminal device may be connected to one MN and two or more than two SNs. The following describes this application by using the DC scenario. It may be understood that the technical solutions provided in this application are also applicable to the MC scenario.

In the DC scenario, the terminal device separately initiates RACH access processes to a cell (cell) managed by an MN and a cell managed by an SN, and generates corresponding RA reports. Specifically, the terminal device initiates the RACH access process to the cell managed by the MN, and generates the RA report (referred to as an MN RA report below) for the RACH access process of the cell of the MN. Alternatively, the terminal device initiates the RACH access process to the cell managed by the SN, and generates the RA report (referred to as an SN RA report below) for the RACH access process of the cell of the SN. RA reports described in this application include an MN RA report and/or an SN RA report.

The terminal device may record and report a RA report, for example, the MN RA report and the SN RA report, to a network side, so that the network side can optimize a RACH configuration based on the RA report generated by the terminal device.

However, in a current communication transmission process, because a maximum quantity of RA reports that can be stored by the terminal device is predefined in a protocol, after the maximum quantity of RA reports recorded by the terminal device is reached, a RA report is no longer recorded.

Therefore, after the terminal device frequently initiates the RACH access process to the cell of the SN and generates excessive SN RA reports, and when the terminal device initiates the RACH access process to the cell managed by the MN, because a total quantity of RA reports recorded by the terminal device is predefined in the protocol, excessively few MN RA reports are recorded or even no MN RA report is recorded. As a result, a network side device cannot effectively identify a problem in the RACH access process of the MN in time, and cannot perform corresponding RACH configuration optimization.

Based on this, to effectively avoid a problem that excessively few MN RA reports are recorded or even no MN RA report is recorded because excessive SN RA reports are generated, and improve an effect of RACH configuration optimization, embodiments of this application provide a random access report recording method and an apparatus. A quantity of recorded SN RA reports is limited, and a balance is achieved between recording an MN RA report and recording an SN RA report. Therefore, a network side device can obtain appropriate quantities of MN RA reports and SN RA reports. In addition to optimizing, based on the SN RA report, a related configuration of a RACH access process of an SN, a problem in a RACH access process of an MN can be effectively identified in time, and corresponding RACH configuration optimization can be performed.

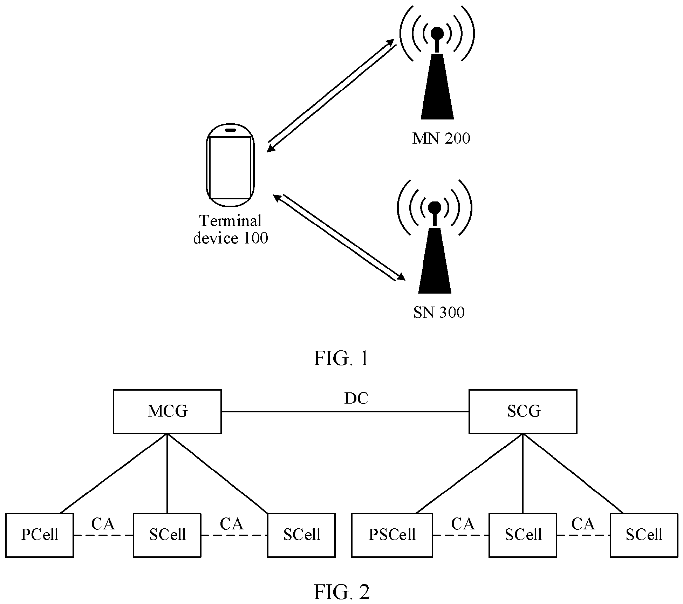

In the following, FIG. 1 is a diagram of a simplified communication architecture for recording a RA report in a DC scenario according to an embodiment of this application.

The communication architecture may include a terminal device 100, an MN 200, and an SN 300.

The terminal device 100 is a device having a wireless transceiver function, and may be a fixed device, a mobile device, a handheld device (for example, a mobile phone), a wearable device, a vehicle-mounted device, a roadside unit (roadside unit, RSU), or a wireless apparatus (for example, a communication module, a modem, or a communication chip) built in the foregoing devices. The terminal device is configured to connect people, things, machines, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self-driving (self-driving), telemedicine (telemedicine), a smart grid (smart grid), smart furniture, a smart office, a smart wearable, smart transportation, a smart city (smart city), an uncrewed aerial vehicle, and a robot. The terminal device may be sometimes referred to as user equipment (user equipment, UE), a terminal, an access station, a UE station, a remote station, a wireless communication device, a user apparatus, or the like. For ease of description, in embodiments of this application, UE is used as an example of the communication apparatus for description.

In embodiments of this application, a communication apparatus configured to implement a function of the terminal device may be the terminal device, or may be an apparatus, for example, a communication module or a chip system, that can support the terminal device in implementing the function. The apparatus may be installed in the terminal device. In the technical solutions provided in embodiments of this application, the technical solutions provided in embodiments of this application are described by using an example in which the apparatus configured to implement the function of the terminal device is the terminal device.

The MN 200 and the SN 300 are access network devices. The access network device is a network side device, for example, a base station, that has a wireless transceiver function and that is configured to communicate with the terminal device. The access network device includes but is not limited to a base transceiver station (BTS), a NodeB (NodeB), an evolved NodeB (eNodeB/eNB, or gNodeB/gNB), a transmission reception point (transmission reception point, TRP), a subsequently evolved base station of the 3rd generation partnership project (3rd generation partnership project, 3GPP), an access node in a wireless fidelity (wireless fidelity, Wi-Fi) system, a wireless relay node, a wireless backhaul node, and the like. Alternatively, the access network device may be a radio controller in a cloud radio access network (cloud radio access network, CRAN) scenario, a central unit (central unit, CU), and/or a distributed unit (distributed unit, DU). The access network device may alternatively be a server, a wearable device, a vehicle-mounted device, an RSU, or the like. The access network device may include one or more co-site or non-co-site transmission reception points. In addition, the access network device may directly communicate with the terminal device, or may communicate with the terminal device via a relay station.

In embodiments of this application, a communication apparatus configured to implement a function of the access network device may be a base station, or may be an apparatus, for example, a communication module or a chip system, that can support the base station in implementing the function. The apparatus may be installed in the base station. In the technical solutions provided in embodiments of this application, the technical solutions provided in embodiments of this application are described by using an example in which an apparatus configured to implement a function of a node is a base station.

The MN 200 and the SN 300 may support networks of a same access technology, or may support networks of different access technologies. For example, the MN 200 and the SN 300 may be base stations belonging to a same radio access technology (radio access technology, RAT). For example, both the MN 200 and the SN 300 may be 4G base stations or 5G base stations. In addition, the MN 200 and the SN 300 may alternatively be base stations of different RATs. For example, the MN 200 is a 4G base station, and the SN 300 is a 5G base station. Alternatively, the MN 200 is a 5G base station, and the SN 300 is a 4G base station.

The network side device in embodiments of this application may alternatively be a network management device such as an OAM device.

The DC in embodiments of this application may include various forms, for example, evolved universal terrestrial radio access new radio dual connectivity (E-UTRA-NR dual connectivity, EN-DC), next-generation radio access network evolved universal terrestrial radio access dual connectivity (next generation-RAN E-UTRA dual connectivity, NGEN-DC), new radio evolved universal terrestrial radio access dual connectivity (NR-E-UTRA dual connectivity, NE-DC), and new radio dual connectivity (NR dual connectivity, NR-DC).

Further, as shown in FIG. 2, in the DC, there may be two cell groups (cell groups), namely, a master cell group (master cell group, MCG) and a secondary cell group (secondary cell group, SCG). The MCG is a cell group in which the MN provides a service for the terminal device, and the SCG is a cell group in which the SN provides a service for the terminal device.

The MCG includes one primary cell (primary cell, PCell), and the PCell is a cell working on a primary carrier. The terminal device performs an initial connection establishment process or starts a connection re-establishment process in the PCell. Optionally, the MCG may further include one or more secondary cells (secondary cells, SCells), and the SCell is a cell working on a secondary carrier.

The SCG includes one primary secondary cell (primary secondary cell, PSCell), and the PSCell is a cell in which the terminal device is indicated to perform RACH or initial physical uplink shared channel (physical uplink shared channel, PUSCH) transmission for the SN. Optionally, the SCG may further include one or more SCells.

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art may know that, as the network architecture evolves and a new service scenario emerges, the technical solutions provided in embodiments of this application are also applicable to a similar technical problem.

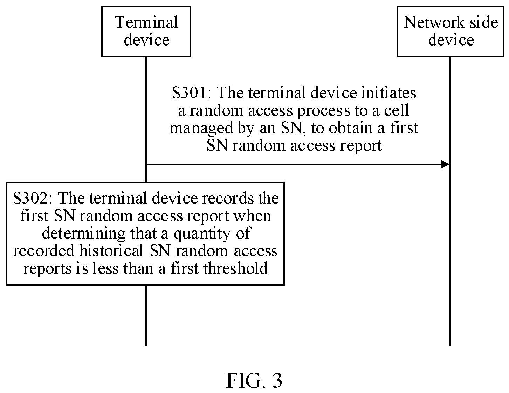

FIG. 3 is an example flowchart of a random access report recording method according to an embodiment of this application. The method may include the following operations. The embodiment shown in FIG. 3 may be applied to a DC scenario, an MC scenario, or the like. This is not limited herein.

S301: A terminal device initiates a RACH access process to a cell managed by an SN, to obtain a first SN RA report.

For example, when adding an SN or changing the SN, the terminal device may trigger the terminal device to initiate a RACH access process in a cell managed by a new SN. This is not limited herein.

S302: The terminal device records the first SN RA report when a quantity of historical SN RA reports recorded by the terminal device is less than a first threshold.

The historical SN RA report refers to an SN RA report that has been recorded and stored by the terminal device before the terminal device obtains the first SN RA report.

The first threshold may be a maximum quantity of SN RA reports that the terminal device is allowed to record. In this embodiment of this application, the first threshold is a natural number. It may be understood that when the first threshold is 0, the terminal device skips recording the SN RA report.

For example, it is assumed that the first threshold is 5. The terminal device initiates a RACH access process to a cell 1 managed by the SN, and the terminal device obtains an SN RA report 1 of the cell 1. Then, the terminal device determines that a quantity of historical SN RA reports is 4, which is less than the first threshold. In this case, the terminal device records the SN RA report 1. In addition, the terminal device may update the quantity of historical SN RA reports to 5.

In this embodiment of this application, the first threshold may be determined by the terminal device in a plurality of manners that are not specifically limited to the following several manners:

**Determining manner 1:** The first threshold is predefined in a protocol.

It may be understood that different first thresholds may be predefined for terminals with different capabilities. This is not limited.

**Determining manner 2:** The first threshold is determined through negotiation between the terminal device and a network side device.

In an example, the terminal device may send a first threshold negotiation request to the network side device, where the negotiation request may include an expected value of the first threshold. The network side device may feed back a negotiation response to the terminal device based on the negotiation request, and negotiate with the terminal device to determine the first threshold.

In another example, the network side device may send a first threshold negotiation request to the terminal device, where the negotiation request may include an expected value of the first threshold. The terminal device may feed back a negotiation response to the network side device based on the negotiation request, and negotiate with the network side device to determine the first threshold.

In the determining manner 2, the network side device may be an MN of the terminal device.

It should be noted that first thresholds determined through negotiation between the terminal device and different network side devices may be the same or may be different. This is not limited herein. For example, a first threshold determined through negotiation between a terminal device 1 and a network side device 1 is 4, a first threshold determined through negotiation between the terminal device 1 and a network side device 2 is 5, and a first threshold determined through negotiation between the terminal device 1 and a network side device 3 is 4. The network side device 1, the network side device 2, and the network side device 3 may each serve as an MN of the terminal device.

**Determining manner 3:** The first threshold is indicated by first indication information received by the terminal device from the network side device.

In an example, when the network side device is an operation, administration and maintenance device, the first indication information may be carried in an operation, administration and maintenance configuration message. When the network side device is an MN of the terminal device, the first indication information may be carried in a system message or a radio resource control (Radio Resource Control, RRC) message. The system message may be a SIB 1, and the RRC message may be an RRC reconfiguration message.

It should be noted that, in this embodiment of this application, that the terminal device obtains the RA report may be understood as instantaneous obtaining, or may be understood as that the terminal device generates the RA report but does not perform non-volatile storage. Recording the RA report may be understood as performing non-volatile storage on the obtained RA report, and the stored RA report may be stored for at least a period of time, for example, until a next RA report is obtained. For example, in this embodiment of this application, a storage module of the terminal device may include a first storage module and a second storage module. The first storage module is configured to temporarily store the RA report obtained by the terminal device, and the second storage module is configured to actually store the RA report recorded by the terminal device.

The second storage module may include a RA report list, and the RA report list is for storing historical RA reports, where each RA report includes cell identifier (cell ID) information and RACH access process information.

Specifically, in this embodiment of this application, the RA report list includes the first SN RA report, and may further include one or more of other historical SN RA reports, and a quantity of SN RA reports included in the RA report list is less than or equal to the first threshold.

In addition, the RA report list may further include an MN RA report, and a sum of a quantity of MN RA reports and the quantity of SN RA reports included in the RA report list is less than or equal to a second threshold. Alternatively, a quantity of MN RA reports included in the RA report list is less than or equal to a third threshold.

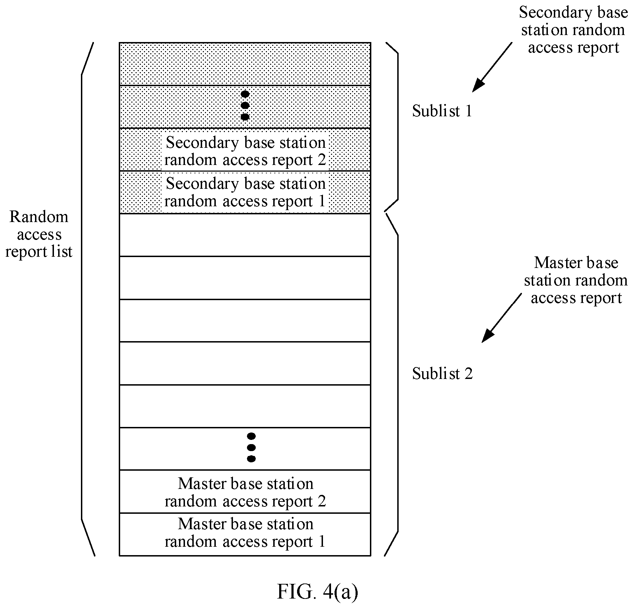

For example, the RA report list provided in this embodiment of this application may be shown in FIG. 4(a). The RA report list may be divided into two parts, namely, a sublist 1 and a sublist 2. The sublist 1 is for storing SN RA reports in a recording sequence, and a maximum quantity of recorded reports of the sublist 1 is the first threshold. The sublist 2 is for storing MN RA reports in a recording sequence, and a maximum recorded quantity of the sublist 2 is the third threshold. Alternatively, a sum of the maximum recorded quantity of the sublist 2 and the maximum recorded quantity of the sublist 1 is the second threshold.

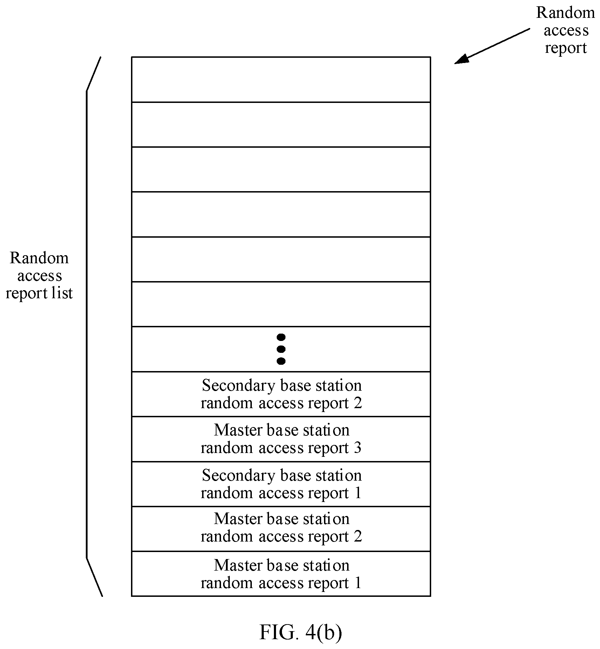

The RA report list provided in this embodiment of this application may alternatively be shown in FIG. 4(b). The RA report list is a general list, and is for storing RA reports in a recording sequence without distinguishing between an MN and an SN, and a maximum recorded quantity of the general list is the second threshold. After it is determined that a quantity of historical SN RA reports in the general list is equal to the first threshold, remaining storage space of the general list is for storing the MN RA report.

In this embodiment of this application, a value of the second threshold or the third threshold may be equal to a maximum value, predefined in an existing protocol, of a total quantity of RA reports that the terminal device is allowed to record.

Further, after the terminal device records the first SN RA report, the terminal device may further send the RA report list to an MN.

In this embodiment of this application, the terminal device is triggered to send the RA report list to the MN in a plurality of cases that are not specifically limited to the following several cases:

Trigger manner 1: When receiving a random access report request message sent by the MN, the terminal device is triggered to send the RA report list to the MN.

Trigger manner 2: When a total quantity of historical RA reports in the RA report list meets the second threshold, to be specific, a sum of the quantity of historical SN RA reports and a quantity of historical MN RA reports is equal to the second threshold, the terminal device may be triggered to send the RA report list to the MN.

The historical MN RA report refers to an MN RA report that has been recorded and stored by the terminal device before the terminal device obtains the latest MN RA report.

Trigger manner 3: The terminal device periodically sends the RA report list to the MN, where a periodicity of sending the RA report list may be preset, or may be indicated by the MN of the terminal device.

When the RA report list includes the SN RA report, after receiving the RA report list, the MN may further send the SN RA report in the RA report list to a corresponding SN based on a cell ID included in each RA report in the RA report list.

Further, when the terminal device determines that the quantity of historical SN RA reports is equal to the first threshold, the terminal device may perform the following two operations:

**Operation manner 1:** The terminal device quits recording the first SN RA report.

For example, it is assumed that the first threshold in this embodiment of this application is 5. The terminal device initiates a RACH access process to a cell 2 managed by an SN, to obtain an SN RA report 2 of the cell 2. Then, when the terminal device determines that the quantity of historical SN RA reports is 5, which is equal to the first threshold, the terminal device skips recording the SN RA report 2.

**Operation manner 2:** The terminal device deletes an earliest recorded historical SN RA report, and records the first SN RA report. Alternatively, the terminal device randomly deletes one historical SN RA report, and records the first SN RA report.

For example, it is assumed that the first threshold in this embodiment of this application is 5. The terminal device initiates a RACH access process to a cell 2 managed by an SN, to obtain an SN RA report 2 by performing RACH with the cell 2. Then, when the terminal device determines that the quantity of historical SN RA reports is 5, which is equal to the first threshold, the terminal device deletes an earliest recorded historical SN RA report, for example, deletes an earliest recorded historical SN RA report 3, and then records the SN RA report 2. Alternatively, the terminal device randomly deletes one historical SN RA report. For example, if the historical SN RA reports in the RA report list include the SN RA report 1 and SN RA reports 3 to 6, one historical SN RAreport randomly selected by the terminal device to be deleted is the SN RAreport 4, and the SN RA report 2 is then recorded.

In an implementation of this application, in a scenario in which the terminal device initiates a RACH access process to a cell managed by the MN, to obtain a first MN RA report, the terminal device may further determine a manner of recording and reporting the first MN RA report with reference to the sum of the quantity of historical SN RA reports and the quantity of historical MN RA reports (that is, the total quantity of historical RA reports) or with reference to the quantity of historical MN RA reports.

Manners in which the terminal device performs an operation on the obtained first MN RA report based on the total quantity of historical RA reports or the quantity of historical MN RA reports are not specifically limited to the following several manners:

**Operation manner 1:** The terminal device records the first MN RA report when determining that the sum of the quantity of historical SN RA reports and the quantity of historical MN RA reports is less than the second threshold.

For example, it is assumed that the second threshold is 15. The terminal device initiates a RACH access process to a cell 1 managed by the MN, to obtain an MN RA report 1 of the cell 1. Then, when the terminal device determines that the quantity of historical RA reports is 14, which is less than the second threshold, the terminal device records the MN RA report 1.

**Operation manner 2:** The terminal device deletes the earliest recorded historical SN RA report, and records the first MN RA report; or randomly deletes one historical SN RA report, and records the first MN RA report when determining that the sum of the quantity of historical SN RA reports and the quantity of historical MN RA reports is equal to the second threshold, and the quantity of historical SN RA reports is greater than 0.

For example, it is assumed that the second threshold is 15. The terminal device initiates a RACH access process to a cell 2 managed by the MN, to obtain an MN RA report 2 of the cell 2. Then, when the terminal device determines that the total quantity of historical RA reports is 15, which is equal to the second threshold, and the quantity of historical SN RA reports is greater than 0, the terminal device deletes the earliest recorded historical SN RA report, where for example, the deleted earliest recorded historical SN RA report is the SN RA report 2, and records the MN RA report 2. Alternatively, the terminal device randomly deletes one historical SN RA report. For example, if the historical SN RA reports in the RA report list include the SN RA report 1 and the SN RA reports 3 to 6, one historical SN RA report randomly selected by the terminal device to be deleted is the SN RA report 4, and the MN RA report 2 is then recorded.

Because the MN further undertakes control plane signaling exchange with a core network, from a perspective of optimizing the RACH access process on a network side, importance of a RACH access process of the MN is higher than that of a RACH access process of the SN. Therefore, RACH optimization of the MN should take precedence over RACH optimization of the SN. Based on this, when the RA report is recorded in the operation manner 2, a problem in the RACH access process of the MN can be effectively identified in time, and corresponding RACH configuration optimization can be performed.

Optionally, in an implementation, the terminal device further has a function of preferentially recording the MN RA report.

For example, the terminal device may receive second indication information sent by the network side device, where the second indication information indicates the terminal device to preferentially record the MN RA report, so that the terminal device may delete an SN RA report based on an indication of the network side, and record a latest obtained MN RA report.

The second indication information may be carried in the operation, administration and maintenance configuration message, the system message, or the radio resource control message that is sent by the network side device and that is received by the terminal device.

**Operation manner 3:** When the terminal device determines that the sum of the quantity of historical SN RA reports and the quantity of historical MN RA reports is equal to the second threshold, and the quantity of historical SN RA reports is 0, in other words, the terminal device determines that no SN RA report is recorded, and the quantity of historical MN RA reports reaches the maximum value of the quantity of RA reports that the terminal device is allowed to record, the terminal device may delete an earliest recorded historical MN RA report, and record the first MN RA report; or randomly delete one historical MN RA report, and record the first MN RA report.

For example, it is assumed that the second threshold is 15. The terminal device initiates a RACH access process to a cell 3 managed by the MN, to obtain an MN RA report 3 of the cell 3. Then, when the terminal device determines that the total quantity of historical RA reports is 15, which is equal to the second threshold, and the quantity of historical SN RA reports is 0, the terminal device deletes an earliest recorded historical MN RA report. For example, the deleted earliest recorded historical MN RA report is an MN RA report 1, and the MN RA report 3 is recorded. Alternatively, the terminal device randomly deletes one historical MN RA report, and records the MN RA report 3.

**Operation manner 4:** The terminal device skips recording the first MN RA report when determining that the sum of the quantity of historical SN RA reports and the quantity of historical MN RA reports is equal to the second threshold, and the quantity of historical SN RA reports is 0.

For example, it is assumed that the second threshold is 15. The terminal device initiates a RACH access process to a cell 3 managed by the MN, to obtain an MN RA report 3 of the cell 3. Then, when the terminal device determines that the total quantity of historical RA reports is 15, which is equal to the second threshold, and the quantity of historical SN RA reports is 0, the terminal device skips recording the first MN RA report.

**Operation manner 5:** The terminal device records the first MN RA report when determining that the quantity of historical MN RA reports is less than the third threshold.

For example, it is assumed that the third threshold is 10. The terminal device initiates a RACH access process to a cell 1 managed by the MN, to obtain an MN RA report 1 of the cell 1. Then, when the terminal device determines that the total quantity of historical RA reports is 9, which is less than the third threshold, the terminal device records the MN RA report 1.

**Operation manner 6:** The terminal device skips recording the first MN RA report when determining that the quantity of historical MN RA reports is equal to the third threshold.

For example, it is assumed that the third threshold is 10. The terminal device initiates a RACH access process to a cell 2 managed by the MN, to obtain an MN RA report 2 of the cell 2. Then, when the terminal device determines that the total quantity of historical RA reports is 10, which is equal to the third threshold, the terminal device skips recording the MN RA report 2.

**Operation manner** 7: The terminal device deletes an earliest recorded historical MN RA report, and records the first MN RA report; or randomly deletes one historical MN RA report, and records the first MN RA report when determining that the quantity of historical MN RA reports is equal to the third threshold.

For example, it is assumed that the third threshold is 10. The terminal device initiates a RACH access process to a cell 2 managed by the MN, to obtain an MN RA report 2 obtained by performing RACH with the cell 2. Then, when the terminal device determines that the quantity of historical MN RA reports is 10, which is equal to the third threshold, the terminal device deletes the earliest recorded historical MN RA report, for example, deletes an earliest recorded MN RA report 4, and then records the MN RA report 2. Alternatively, the terminal device randomly deletes one historical MN RA report. For example, if the historical MN RA reports in the RA report list include an MN RA report 1 and MN RA reports 3 to 11, the MN RA report randomly selected by the terminal device to be deleted is the MN RA report 6.

To better ensure that the terminal device effectively records a latest RA report in time, in an implementation of this application, the terminal device may further delete a part or all of historical RA reports after a first condition is met. It may be understood that, in this implementation, the latest RA report may be a latest MN RA report obtained by the terminal device or a latest SN RA report obtained by the terminal device. This is not limited. Historical RA reports include a historical MN RA report and/or SN RA report recorded by the terminal device.

The first condition may be that there is an interval of first preset duration since the terminal device previously performs an operation of deleting the historical RA report.

For example, in this application, a timer may be set, and timing duration of the timer is the first preset duration. After completing an operation of deleting a part or all of historical RA reports, the terminal device restarts the timer. After the timer times out, the terminal device is triggered to perform the operation of deleting a part or all of the historical RA reports again. Alternatively, the first condition may be that the terminal device receives fourth indication information from the network side device, where the fourth indication information indicates to delete a part or all of historical SN RA reports. The fourth indication information may be carried in the operation, administration and maintenance configuration message, the system message, or the radio resource control message sent by the network side device to the terminal device.

In an example, after the first condition is met, the terminal device may delete all of the historical SN RA reports, or delete all of the historical RA reports. In this case, the SN RA report and the MN RA report are not distinguished.

In another example, after the first condition is met, the terminal device may delete a part of the historical RA reports. The deleted part of historical RA reports may be SN RA reports recorded earlier. Alternatively, the deleted part of historical RA reports may be MN RA reports recorded earlier. In this case, the SN RA report and the MN RA report are not distinguished.

Alternatively, in another implementation of this application, when recording a RA report, the terminal device may further record a timestamp at which the RA report is obtained, and delete the RA report after recording duration of the RA report exceeds second preset duration.

In an example, the terminal device may record a timestamp for the SN RA report or the MN RA report. For example, when determining that the recorded RA report is an SN RA report, the terminal device may record a timestamp at which the SN RA report is obtained, and delete the SN RA report after recording duration of the SN RA report exceeds the second preset duration.

In another example, the terminal device may not distinguish between the SN RA report and the MN RA report, records, provided that a RA report is recorded, a timestamp at which the RA report is obtained, and deletes the RA report after recording duration of the RA report exceeds the second preset duration.

To better describe the random access report recording method provided in this application, a plurality of application scenarios are selected based on the content shown in FIG. 2 and with reference to a communication architecture shown in FIG. 4(a) and FIG. 4(b) for further detailed description.

A part of steps in the following several random access report recording manners may be optional, and a sequence of steps does not represent an actual execution sequence. Therefore, this application is not limited to being performed completely based on the following steps and sequence. In addition, the following several random access report recording scenarios may be combined for application. This is not limited herein.

**Scenario 1:** A **terminal device records a RA report based on a first threshold and a second threshold predefined in a protocol.**

The first threshold is a maximum quantity of SN RA reports that the terminal device is allowed to record, and the second threshold is a maximum value of a sum of a quantity of SN RA reports and a quantity of MN RA reports that the terminal device is allowed to record (where for ease of description, the sum is subsequently referred to as a total quantity of RA reports for short).

It may be understood that the second threshold is greater than or equal to the first threshold. For detailed descriptions of the first threshold and the second threshold, refer to related content in the embodiment shown in FIG. 2.

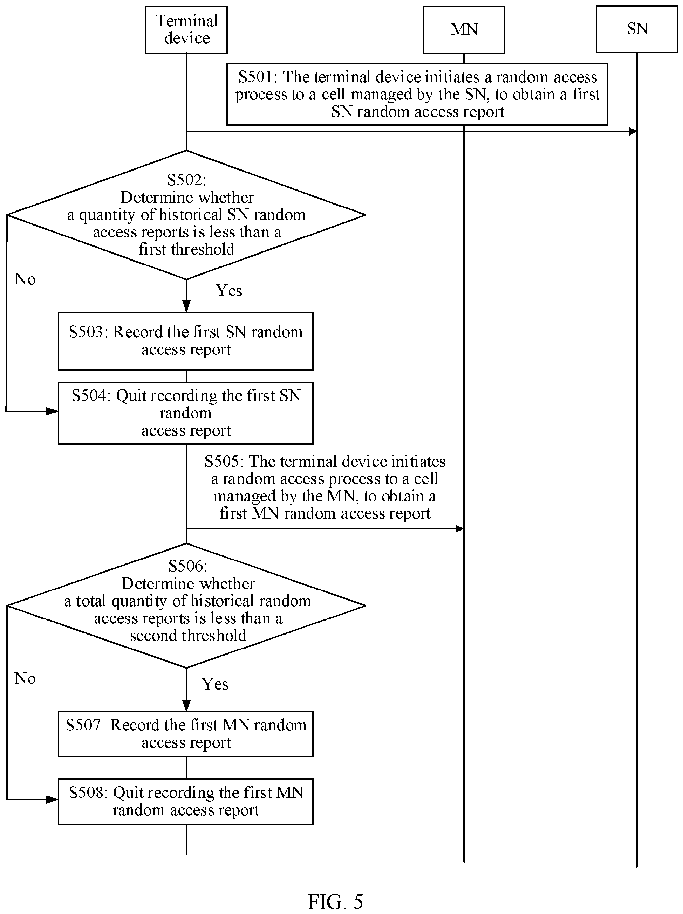

Refer to FIG. 5. The scenario 1 may include the following steps.

S501: The terminal device initiates a RACH access process to a cell managed by an SN, to obtain a first SN RA report.

S502: The terminal device determines whether a quantity of historical SN RA reports is less than a first threshold; and if the quantity is less than the first threshold, S503 is performed; otherwise, S504 is performed.

S503: The terminal device records the first SN RA report.

S504: The terminal device quits recording the first SN RA report.

Optionally, S504 may be replaced with: The terminal device deletes an earliest recorded historical SN RA report, and records the first SN RA report. Alternatively, S504 may be replaced with: The terminal device randomly deletes one historical SN RA report, and records the first SN RA report.

S505: The terminal device initiates a RACH access process to a cell managed by an MN, to obtain a first MN RA report.

S506: The terminal device determines whether a total quantity of historical RA reports is less than a second threshold; and if the quantity is less than the second threshold, S507 is performed; otherwise, S508 is performed.

S507: The terminal device records the first MN RA report.

S508: The terminal device quits recording the first MN RA report.

Optionally, S508 may be replaced with: The terminal device deletes the earliest recorded historical SN RA report, and records the first MN RA report. Alternatively, S508 may be replaced with: When determining that the quantity of historical SN RA reports is 0, the terminal device deletes an earliest recorded historical MN RA report, and records the first MN RA report. Alternatively, S508 may be replaced with: The terminal device randomly deletes one historical SN RA report, and records the first MN RA report. Alternatively, S508 may be replaced with: When determining that the quantity of historical SN RAreports is 0, the terminal device randomly deletes one historical MN RA report, and records the first MN RA report.

**Scenario 2: A terminal device records a RA report based on a first threshold indicated by received first indication information sent by a network side device.**

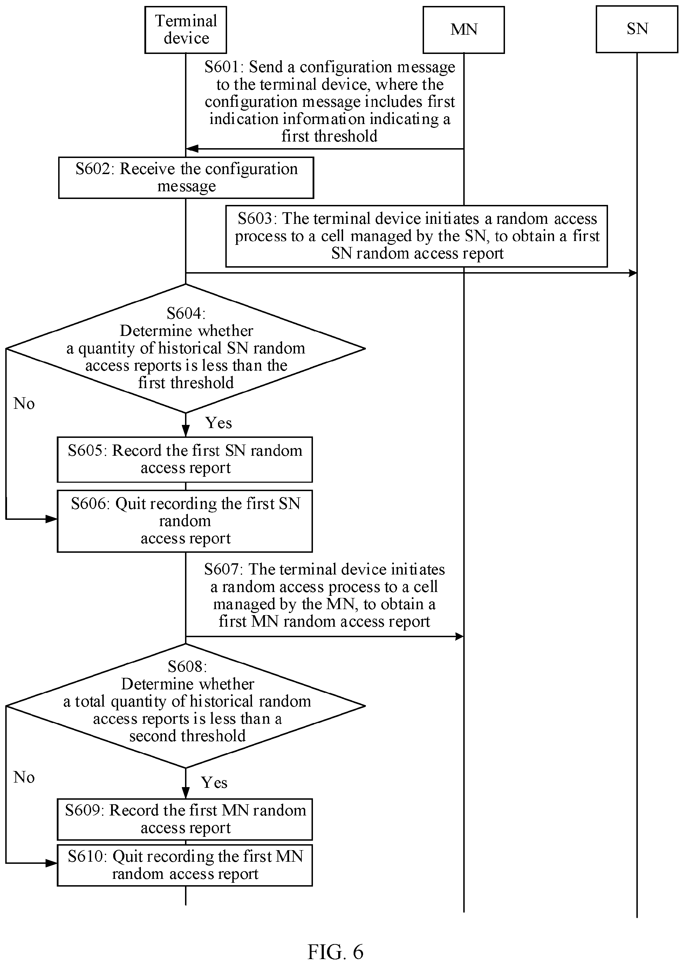

Refer to FIG. 6. When it is assumed that the first indication information is carried in a configuration message sent by the network side device to the terminal device, the scenario 2 may include the following steps.

S601: The network side device sends the configuration message to the terminal device, where the configuration message includes the first indication information, and the first indication information indicates a first threshold.

The network side device may be an MN of the terminal device or an OAM device. This is not limited herein.

S602: The terminal device receives the configuration message from the network side device.

S603: The terminal device initiates a RACH access process to a cell managed by an SN, to obtain a first SN RA report.

S604: The terminal device determines whether a quantity of historical SN RA reports is less than the first threshold; and if the quantity is less than the first threshold, S605 is performed; otherwise, S606 is performed.

S605: The terminal device records the first SN RA report.

S606: The terminal device quits recording the first SN RA report.

Optionally, S606 may be replaced with: The terminal device deletes an earliest recorded historical SN RA report, and records the first SN RA report. Alternatively, S606 may be replaced with: The terminal device randomly deletes one historical SN RA report, and records the first SN RA report.

S607: The terminal device initiates a RACH access process to a cell managed by an MN, to obtain a first MN RA report.

S608: The terminal device determines whether a total quantity of historical RA reports is less than a second threshold; and if the quantity is less than the second threshold, S609 is performed; otherwise, S610 is performed.

S609: The terminal device records the first MN RA report.

S610: The terminal device quits recording the first MN RA report.

Optionally, S610 may be replaced with: The terminal device deletes the earliest recorded historical SN RA report, and records the first MN RA report. Alternatively, S610 may be replaced with: When determining that the quantity of historical SN RA reports is 0, the terminal device deletes an earliest recorded historical MN RA report, and records the first MN RA report. Alternatively, S610 may be replaced with: The terminal device randomly deletes one historical SN RA report, and records the first MN RA report. Alternatively, S610 may be replaced with: When determining that the quantity of historical SN RAreports is 0, the terminal device randomly deletes one historical MN RA report, and records the first MN RA report.

**Scenario 3:** A **terminal device records a RA report based on received second indication information sent by a network side device, where the second indication information indicates to preferentially record an MN RA report.**

It should be noted that, in this embodiment of this application, the second indication information and a first threshold and/or a second threshold may be carried in a same message. This is not limited herein.

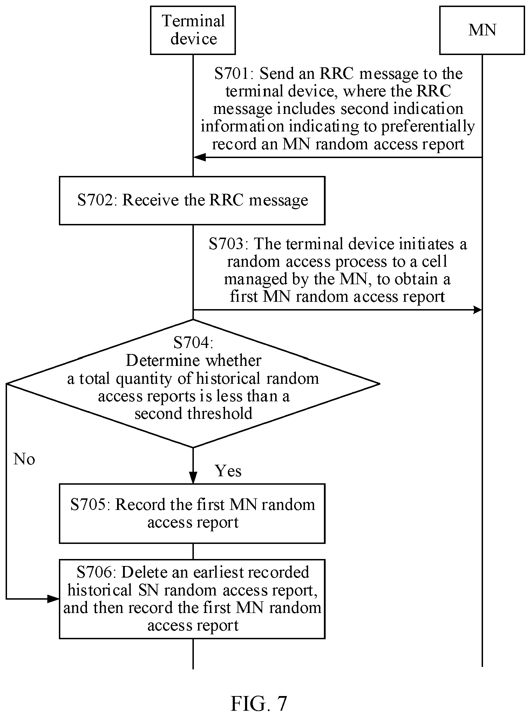

Refer to FIG. 7. When it is assumed that the second indication information is carried in an RRC message sent by the network side device to the terminal device, the scenario 3 may include the following steps. In this implementation, the network side device is an MN of the terminal device.

S701: The network side device sends the RRC message to the terminal device, where the RRC message includes the second indication information, and the second indication information indicates to preferentially record the MN RA report.

The network side device may be the MN.

S702: The terminal device receives the RRC message from the network side device.

S703: The terminal device initiates a RACH access process to a cell managed by the MN, to obtain a first MN RA report.

S704: The terminal device determines whether a total quantity of historical RA reports is less than the second threshold; and if the quantity is less than the second threshold, S705 is performed; otherwise, S706 is performed.

S705: The terminal device records the first MN RA report.

S706: The terminal device deletes an earliest recorded historical SN RA report, and records the first MN RA report.

Optionally, S706 may be replaced with: When determining that a quantity of historical SN RA reports is 0, the terminal device deletes an earliest recorded historical MN RA report, and records the first MN RA report. Alternatively, S706 may be replaced with: The terminal device randomly deletes one historical SN RA report, and records the first MN RA report. Alternatively, S706 may be replaced with: When determining that a quantity of historical SN RA reports is 0, the terminal device randomly deletes one historical MN RA report, and records the first MN RA report.

**Scenario 4: A terminal device records a RA report based on received third indication information sent by a network side device, where the third indication information indicates to preferentially record a currently obtained RA report.**

It should be noted that, in this embodiment of this application, the third indication information and a first threshold and/or a second threshold may be carried in a same message. This is not limited herein.

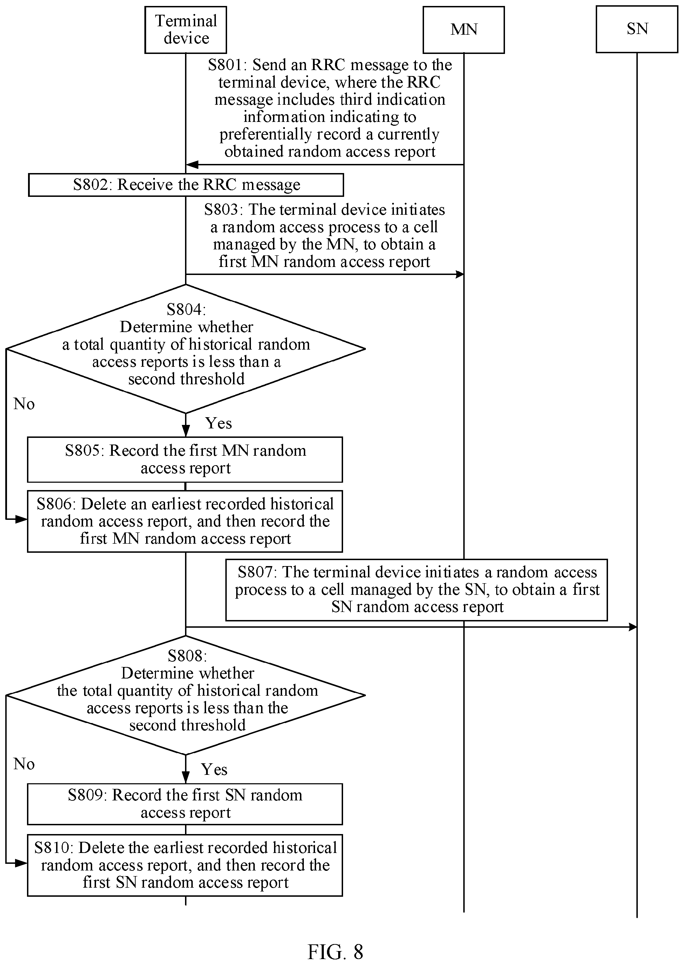

Refer to FIG. 8. When it is assumed that the third indication information is carried in an RRC message sent by the network side device to the terminal device, the scenario 4 may include the following steps. In this implementation, the network side device is an MN of the terminal device.

S801: The network side device sends the RRC message to the terminal device, where the RRC message includes the third indication information, and the third indication information indicates to preferentially record the currently obtained RA report.

It may be understood that whether the currently obtained RA report in S801 is an MN RA report or an SN RA report may not be distinguished. If the currently obtained RA report is an MN RA report 3, the terminal device preferentially records the currently obtained MN RA report 3. If the currently obtained RA report is an SN RA report 2, the terminal device preferentially records the currently obtained SN RA report 2.

S802: The terminal device receives the RRC message from the network side device.

S803: The terminal device initiates a RACH access process to a cell managed by the MN, to obtain a first MN RA report.

S804: The terminal device determines whether a total quantity of historical RA reports is less than the second threshold; and if the quantity is less than the second threshold, S805 is performed; otherwise, S806 is performed.

S805: The terminal device records the first MN RA report.

S806: The terminal device deletes an earliest recorded historical RAreport, and records the first MN RA report.

It may be understood that whether the earliest recorded historical RA report in S806 is an MN RA report or an SN RA report may not be distinguished. For example, if the earliest recorded RA report is an MN RA report 4, the terminal device deletes the MN RA report 4, and records the first MN RA report. For another example, if the earliest recorded RA report is an SN RA report 6, the terminal device deletes the SN RA report 6, and records the first MN RA report.

Optionally, S806 may be replaced with: The terminal device randomly deletes one historical RA report, and records the first MN RA report. Alternatively, S806 may be replaced with: The terminal device randomly deletes one historical SN RA report, and records the first MN RA report. Alternatively, S806 may be replaced with: The terminal device deletes an earliest recorded SN RA report, and records the first MN RA report.

S807: The terminal device initiates a RACH access process to a cell managed by an SN, to obtain a first SN RA report.

S808: The terminal device determines whether the total quantity of historical RA reports is less than the second threshold; and if the quantity is less than the second threshold, S809 is performed; otherwise, S810 is performed.

S809: The terminal device records the first SN RA report.

S810: The terminal device deletes the earliest recorded historical RA report, and records the first SN RA report.

As described in S806, whether the earliest recorded historical RA report in S810 is an MN RA report or an SN RA report may not be distinguished.

Optionally, S810 may be replaced with: The terminal device randomly deletes one historical RA report, and records the first SN RA report. Alternatively, S810 may be replaced with: The terminal device randomly deletes one historical SN RA report, and records the first SN RA report. Alternatively, S810 may be replaced with: The terminal device deletes the earliest recorded SN RA report, and records the first SN RA report.

**Scenario 5: When determining that a first condition is met, a terminal device deletes a part or all of historical SN RA reports, to better ensure recording of a newly obtained RA report, where the first condition may be that there is an interval of first preset duration since the terminal device previously performs an operation of deleting a historical RA report.**

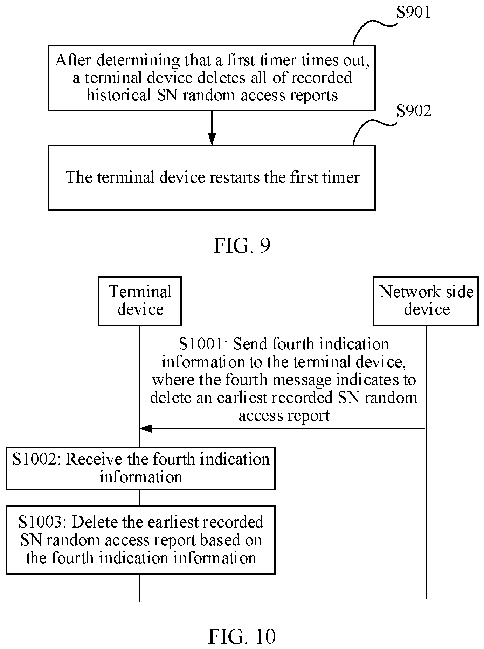

Refer to FIG. 9. The scenario 5 may include the following steps.

S901: After determining that a first timer times out, the terminal device deletes all of the historical SN RA reports.

Timing duration of the first timer is the first preset duration.

Optionally, S901 may be replaced with: After determining that the first timer times out, the terminal device randomly deletes N historical RA reports, where N is a positive integer less than or equal to a second threshold. Alternatively, S901 may be replaced with: After determining that the first timer times out, the terminal device deletes an earliest recorded historical SN RA report.

S902: The terminal device restarts the first timer.

**Scenario 6: When determining that a first condition is met, a terminal device deletes a part or all of historical SN RA reports, to better ensure recording of a newly obtained RA report, where the first condition may be that the terminal device receives fourth indication information from a network side device, and the fourth indication information indicates to delete a part or all of historical SN RA reports.**

Refer to FIG. 10. The scenario 6 may include the following steps. In this implementation, the network side device may be an MN of the terminal device or an OAM device.

S1001: The network side device sends the fourth indication information to the terminal device, where the fourth indication information indicates to delete an earliest recorded historical SN RA report.

Optionally, S1001 may be replaced with: The fourth indication information indicates to randomly delete N historical RA reports, where N is a positive integer less than or equal to a second threshold. Alternatively, S1001 may be replaced with: The fourth indication information indicates to delete all of historical RA reports.

S1002: The terminal device receives the fourth indication information sent by the network side device.

S1003: The terminal device deletes the earliest recorded historical SN RA report based on the fourth indication information.

Optionally, S1003 may be replaced with: When the fourth indication information indicates to randomly delete N historical RA reports, the terminal device randomly selects, based on the fourth indication information, N historical SN RA reports from a RA report list, and deletes the N historical SN RA reports. Alternatively, S1003 may be replaced with: When the fourth indication information indicates to delete all of the historical RA reports, the terminal device deletes all of the historical SN RA reports based on the fourth indication information.

**Scenario 7: A terminal device records a timestamp at which a RA report is obtained together with the RA report, and deletes the RA report after recording duration of a RA report exceeds second preset duration.**

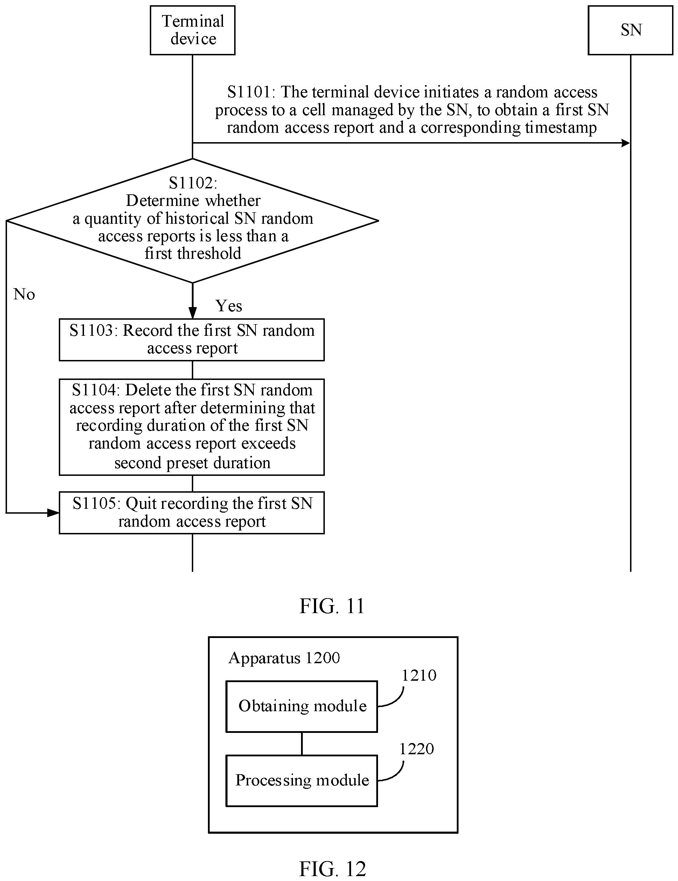

Refer to FIG. 11. The scenario 7 may include the following steps.

S1101: The terminal device initiates a RACH access process to a cell managed by an SN, to obtain a first SN RA report and a corresponding timestamp.

S1102: The terminal device determines whether a quantity of historical SN RA reports is less than a first threshold; and if the quantity is less than the first threshold, S1103 is performed; otherwise, S1105 is performed.

S1103: The terminal device records the first SNRA report.

S1104: The terminal device deletes the first SN RA report after determining that recording duration of the first SN RA report exceeds the second preset duration.

Optionally, the second preset duration is predefined in a protocol. Alternatively, the second preset duration is indicated by a network side device to the terminal device. Alternatively, the second preset duration is determined through negotiation between the terminal device and the network side device. The network side device may be an MN of the terminal device or an OAM device.

S1105: The terminal device quits recording the first SN RA report.

Optionally, S1105 may be replaced with: The terminal device deletes an earliest recorded historical SN RA report, and records the first SN RA report.

Based on a same concept as the foregoing embodiments, embodiments of this application provide communication apparatuses. FIG. 12 to FIG. 14 are diagrams of structures of possible communication apparatuses according to embodiments of this application. The communication apparatus may be configured to implement functions of the terminal device or the network side device in the foregoing method embodiments. Therefore, beneficial effect of the foregoing method embodiments can also be implemented. In embodiments of this application, the apparatus may be a terminal device or a network side device, or may be a module (such as a chip) used in the terminal device or the network side device.

As shown in FIG. 12, an apparatus 1200 may include an obtaining module 1210 and a processing module 1220. The communication apparatus 1200 is configured to implement functions of the terminal device in the method embodiments shown in FIG. 3 to FIG. 11. The obtaining module 1210 is configured to initiate a RACH access process to a cell managed by an SN, to obtain a first SN RA report. The processing module 1220 is configured to record the first SN RA report when a quantity of historical SN RA reports recorded by a terminal device is less than a first threshold.

In a design, the processing module 1220 is further configured to
send a RA report list to an MN, where the RA report list includes the first SN RA report.

In a design, the first threshold is predefined. Alternatively, the first threshold is indicated by first indication information received by the terminal device from a network side device, where the first indication information is carried in an operation, administration and maintenance configuration message, a system message, or a radio resource control message.

In a design, the obtaining module 1210 is further configured to
initiate a RACH access process to a cell managed by the MN, to obtain a first MN RA report.

The processing module 1220 is further configured to:
delete an earliest recorded historical SN RA report, and record the first MN RA report when a sum of the quantity of historical SNRA reports and a quantity of historical MN RA reports recorded by the terminal device is equal to a second threshold, where the second threshold is predefined.

In a design, the processing module 1220 is further configured to
receive second indication information sent by the network side device, where the second indication information indicates the terminal device to preferentially record an MN RA report.

In a design, the second indication information is carried in the operation, administration and maintenance configuration message, the system message, or the radio resource control message.

In a design, the processing module 1220 is further configured to
skip recording the first MN RA report when the quantity of historical SN RA reports is 0.

In a design, the processing module 1220 is further configured to:
delete an earliest recorded historical MN RA report, and record the first MN RA report when the quantity of historical SN RA reports is 0.

In a design, the processing module 1220 is further configured to:
delete the earliest recorded historical SN RA report, and record the first SN RA report when the quantity of historical SN RA reports is equal to the first threshold.

In a design, the processing module 1220 is further configured to
skip recording the first SN RA report when the quantity of SN RA reports is equal to the first threshold.

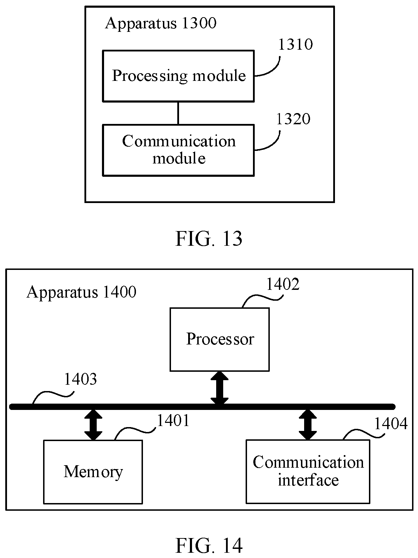

As shown in FIG. 13, an apparatus 1300 may include a processing module 1310 and a communication module 1320. The communication apparatus 1300 is configured to implement functions of the network side device in the method embodiments shown in FIG. 2 to FIG. 11.

The processing module 1310 is configured to determine a first threshold, where the first threshold is a maximum quantity of SN RA reports that can be recorded by a terminal device. The communication module 1320 is configured to send first indication information to the terminal device, where the first indication information includes the first threshold.

In a design, the first indication information is carried in an operation, administration and maintenance configuration message, a system message, or a radio resource control message.

In a design, the communication module 1320 is further configured to
send second indication information to the terminal device, where the second indication information indicates the terminal device to preferentially record an MN RA report.

In a design, the second indication information is carried in the operation, administration and maintenance configuration message, the system message, or the radio resource control message.

In a design, when the communication apparatus is an MN, the communication module 1320 is further configured to
receive a RA report list from the terminal device, where the RA report list includes one or more SN RA reports recorded by the terminal device, and a quantity of SN RA reports is less than or equal to the first threshold.

For more detailed descriptions of the processing module 1310 and the communication module 1320, directly refer to related descriptions in the method embodiment shown in FIG. 3 to FIG. 11. Details are not described herein again.

FIG. 14 is a diagram of a communication apparatus 1400 according to an embodiment of this application. The apparatus 1400 may be an electronic apparatus or a component in the electronic apparatus, for example, a chip or an integrated circuit. The apparatus 1400 may include at least one processor 1402 and a communication interface 1404. Further, optionally, the apparatus may further include at least one memory 1401. Further, optionally, a bus 1403 may be further included. The memory 1401, the processor 1402, and the communication interface 1404 are connected through the bus 1403.

The memory 1401 is configured to provide a storage space, and the storage space may store data such as an operating system and a computer program. The memory 1401 mentioned in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that the memory described in this specification aims to include but is not limited to these memories and any memory of another proper type. The processor 1402 is a module for performing an arithmetic operation and/or a logical operation, and may be specifically one or a combination of a plurality of processing modules such as a central processing unit (central processing unit, CPU), a graphics processing unit (graphics processing unit, GPU), a microprocessor unit (microprocessor unit, MPU), an application-specific integrated circuit (application-specific integrated circuit, ASIC), a field programmable gate array (field programmable gate array, FPGA), a complex programmable logic device (complex programmable logic device, CPLD), a synergistic processing unit (assisting the central processing unit to complete corresponding processing and application), and a microcontroller unit (microcontroller unit, MCU).

It should be noted that when the processor is a general-purpose processor, an ASIC, an FPGA or another programmable logic device, a discrete gate or a transistor logic device, or a discrete hardware component, a memory (storage module) may be integrated into the processor.

The communication interface 1404 may be configured to provide an information input or output for the at least one processor; and/or the communication interface may be configured to receive data sent by the outside and/or send data to the outside, and may be a wired link interface including an ethernet cable and the like, or may be a wireless link (Wi-Fi, Bluetooth, universal wireless transmission, an in-vehicle short-distance communication technology, or the like) interface. Optionally, the communication interface 1404 may further include a transmitter (for example, a radio frequency transmitter or an antenna), a receiver, or the like coupled to the interface.

In some embodiments, the apparatus 1400 may be the terminal device or a component in the terminal device in the foregoing method embodiments, for example, a chip or an integrated circuit. The processor 1402 in the apparatus 1400 is configured to read the computer program stored in the memory 1401, and control the terminal device to perform the following operations:
initiating a RACH access process to a cell managed by an SN, to obtain a first SN RA report; and recording the first SN RA report when a quantity of historical SN RA reports recorded by the terminal device is less than a first threshold.

Optionally, the processor 1402 in the terminal device may be further configured to: read the program in the memory 1401, and perform the method procedure performed by the terminal device in S301 to S302 shown in FIG. 3; or perform the method procedure performed by the terminal device in S501 to S508 shown in FIG. 5; or perform the method procedure performed by the terminal device in S601 to S610 shown in FIG. 6; or perform the method procedure performed by the terminal device in S701 to S706 shown in FIG. 7; or perform the method procedure performed by the terminal device in S801 to S810 shown in FIG. 8; or perform the method procedure performed by the terminal device in S901 to S902 shown in FIG. 9; or perform the method procedure performed by the terminal device in S1001 to S1003 shown in FIG. 10; or perform the method procedure performed by the terminal device in S1101 to S1105 shown in FIG. 11.

For specific details, refer to the records in the foregoing method embodiments, and details are not described again.

In some other embodiments, the apparatus 1400 may be the network side device or a component in the network side device in the foregoing method embodiments, for example, a chip or an integrated circuit. The network side device may be a base station, and the base station may serve as an MN of a terminal device, the network side device may alternatively be an OAM device. The processor 1402 in the apparatus 1400 is configured to read the computer program stored in the memory 1401, and control the network side device to perform the following operations:
determining a first threshold, where the first threshold is a maximum quantity of SN RA reports that can be recorded by a terminal device; and sending first indication information to the terminal device, where the first indication information includes the first threshold.

Optionally, the processor 1402 in the network side device may be further configured to: read the program in the memory 1401, and perform the method procedure performed by the network side device in S301 to S302 shown in FIG. 3; or perform the method procedure performed by the network side device in S501 to S508 shown in FIG. 5; or perform the method procedure performed by the network side device in S601 to S610 shown in FIG. 6; or perform the method procedure performed by the network side device in S701 to S706 shown in FIG. 7; or perform the method procedure performed by the network side device in S801 to S810 shown in FIG. 8; or perform the method procedure performed by the network side device in S901 to S902 shown in FIG. 9; or perform the method procedure performed by the network side device in S1001 to S1003 shown in FIG. 10; or perform the method procedure performed by the network side device in S1101 to S1105 shown in FIG. 11.

For specific details, refer to the records in the foregoing method embodiments, and details are not described again.

An embodiment of this application further provides a communication system, including a terminal device and a network side device.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

It may be clearly understood by a person skilled in the art that, for convenient and brief description, for a detailed working process of the foregoing system, apparatus, and unit, refer to a corresponding process in the foregoing method embodiments. Details are not described herein again.

In embodiments of this application, unless otherwise specified, a quantity of nouns indicates "a singular noun or a plural noun", that is, "one or more". "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of a singular item (piece) or plural items (pieces). For example, at least one of a, b, or c indicates a, b, c, a and b, a and c, b and c, or a, b, and c, where a, b, and c may be singular or plural.

Ordinal numerals such as "first" and "second" in embodiments of this application are used to distinguish between a plurality of objects, and are not intended to limit a size, content, a sequence, a time sequence, an application scenario, priorities, or importance of the plurality of objects. For example, first information and second information may be same information, or may be different information. In addition, the names do not indicate a difference in size, content, priority, application scenario, importance, or the like of the two pieces of information.

Mutual reference may be made to content in embodiments of this application. Unless otherwise specified or a logical conflict occurs, terms and/or descriptions in different embodiments are consistent and may be referenced to each other. Technical features in different embodiments may be combined to form a new embodiment based on an internal logical relationship of the technical features.

The protocol in this application may be a communication protocol or a specification, for example, a 3GPP communication protocol.

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors combined with a digital signal processor core, or any other similar configuration.

Steps of the methods or algorithms described in embodiments of this application may be directly embedded into hardware, a software unit executed by a processor, or a combination thereof. The software unit may be stored in a random access memory (Random Access Memory, RAM), a flash memory, a read-only memory (Read-Only Memory, ROM), an EPROM memory, an EEPROM memory, a register, a hard disk, a removable magnetic disk, a CD-ROM, or a storage medium in any other form in the art. For example, the storage medium may connect to a processor, so that the processor may read information from the storage medium and write information to the storage medium. Alternatively, the storage medium may be integrated into the processor. The processor and the storage media may be disposed in an ASIC.

In one or more example designs, the foregoing functions described in this application may be implemented by hardware, software, firmware, or any combination thereof. If the foregoing functions are implemented by software, these functions may be stored in a computer-readable medium or are transmitted to the computer-readable medium in a form of one or more instructions or code. The computer-readable medium includes a computer storage medium or a communication medium that enables a computer program to move from one place to another. The storage medium may be an available medium that may be accessed by any general or special computer. For example, such a computer-readable medium may include but is not limited to a RAM, a ROM, an EEPROM, a CD-ROM, or another optical disc storage, a disk storage or another magnetic storage apparatus, or any other medium that may be used to bear or store program code, where the program code is in a form of an instruction or a data structure and in a form that can be read by a general or special computer or a general or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disk (disk) and the disc (disc) include a compact disc, a laser disc, an optical disc, a digital versatile disc (Digital Versatile Disc, DVD), a floppy disk, and a Blu-ray disc. The disc usually copies data in a magnetic manner, and the disk usually copies data optically in a laser manner. The foregoing combination may also be included in the computer-readable medium.

## Claims

1. A random access report recording method, wherein the method comprises:
initiating, by a terminal device, a random access process to a cell managed by a secondary node, to obtain a first secondary node random access report; and
recording, by the terminal device, the first secondary node random access report when a quantity of historical secondary node random access reports recorded by the terminal device is less than a first threshold.

2. The method according to claim 1, wherein the method further comprises:
sending, by the terminal device, a random access report list to a master node, wherein the random access report list comprises the first secondary node random access report.

3. The method according to claim 2, wherein the random access report list further comprises one or more of the recorded secondary node random access reports, and a total quantity of secondary node random access reports comprised in the random access report list is less than or equal to the first threshold.

4. The method according to claim 2 or 3, wherein the random access report list further comprises a master node random access report, a total quantity of master node random access reports and secondary node random access reports comprised in the random access report list is less than or equal to a second threshold, and the second threshold is a total quantity of node random access reports that the terminal device is allowed to record; or a total quantity of master node random access reports comprised in the random access report list is less than or equal to a third threshold, and the third threshold is a total quantity of master node random access reports that the terminal device is allowed to record.

5. The method according to any one of claims 2 to 4, wherein before the sending, by the terminal device, a random access report list to a master node, the method further comprises:
receiving, by the terminal device, a random access report request message sent by the master node; or
determining, by the terminal device, that a total quantity of historical random access reports in the random access report list meets the second threshold, wherein the second threshold is the total quantity of node random access reports that the terminal device is allowed to record; or
reaching, by the terminal device, a moment for periodically sending the random access report list to the master node.

6. The method according to any one of claims 1 to 5, wherein the first threshold is predefined; or
the first threshold is indicated by first indication information received by the terminal device from a network side device, wherein the first indication information is carried in an operation, administration and maintenance configuration message, a system message, or a radio resource control message.

7. The method according to any one of claims 1 to 6, wherein the method further comprises:
initiating, by the terminal device, a random access process to a cell managed by the master node, to obtain a first master node random access report; and
recording the first master node random access report when a quantity of historical master node random access reports recorded by the terminal device is less than the third threshold, wherein the third threshold is predefined.

8. The method according to any one of claims 1 to 6, wherein the method further comprises:
initiating, by the terminal device, a random access process to a cell managed by the master node, to obtain a first master node random access report; and
skipping recording, by the terminal device, the first master node random access report when a quantity of historical master node random access reports recorded by the terminal device is equal to the third threshold, wherein the third threshold is predefined.

9. The method according to any one of claims 1 to 6, wherein the method further comprises:
initiating, by the terminal device, a random access process to a cell managed by the master node, to obtain a first master node random access report; and
deleting, by the terminal device, an earliest recorded historical master node random access report, and recording the first master node random access report when a quantity of historical master node random access reports recorded by the terminal device is equal to the third threshold; or
randomly deleting, by the terminal device, one recorded historical master node random access report, and recording the first master node random access report when a quantity of historical master node random access reports recorded by the terminal device is equal to the third threshold.

10. The method according to any one of claims 1 to 6, wherein the method further comprises:
initiating, by the terminal device, a random access process to a cell managed by the master node, to obtain a first master node random access report; and
recording the first master node random access report when a sum of the quantity of historical secondary node random access reports and a quantity of historical master node random access reports recorded by the terminal device is less than the second threshold, wherein the second threshold is predefined.

11. The method according to any one of claims 1 to 6, wherein the method further comprises:
initiating, by the terminal device, a random access process to a cell managed by the master node, to obtain a first master node random access report; and
deleting, by the terminal device, an earliest recorded historical secondary node random access report, and recording the first master node random access report when a sum of the quantity of historical secondary node random access reports and a quantity of historical master node random access reports recorded by the terminal device is equal to the second threshold; or
randomly deleting, by the terminal device, one recorded historical secondary node random access report, and recording the first master node random access report when a sum of the quantity of historical secondary node random access reports and a quantity of historical master node random access reports recorded by the terminal device is equal to the second threshold, wherein the second threshold is predefined.

12. The method according to claim 10, wherein the method further comprises:
receiving, by the terminal device, second indication information sent by the network side device, wherein the second indication information indicates the terminal device to preferentially record the master node random access report.

13. The method according to claim 12, wherein the second indication information is carried in the operation, administration and maintenance configuration message, the system message, or the radio resource control message.

14. The method according to any one of claims 10 to 13, wherein the method further comprises:
skipping recording, by the terminal device, the first master node random access report when the quantity of historical secondary node random access reports is 0.

15. The method according to any one of claims 10 to 13, wherein the method further comprises:
deleting, by the terminal device, an earliest recorded historical master node random access report, and recording the first master node random access report when the quantity of historical secondary node random access reports is 0.

16. The method according to any one of claims 1 to 15, wherein the method further comprises:
deleting, by the terminal device, the earliest recorded historical secondary node random access report, and recording the first secondary node random access report when the quantity of historical secondary node random access reports is equal to the first threshold; or
randomly deleting, by the terminal device, one recorded historical secondary node random access report, and recording the first secondary node random access report when the quantity of historical secondary node random access reports is equal to the first threshold.

17. The method according to any one of claims 1 to 15, wherein the method further comprises:
skipping recording, by the terminal device, the first secondary node random access report when the quantity of secondary node random access reports is equal to the first threshold.

18. A random access report recording method, wherein the method comprises:
determining, by a network side device, a first threshold, wherein the first threshold is a maximum quantity of secondary node random access reports that can be recorded by a terminal device; and
sending, by the network side device, first indication information to the terminal device, wherein the first indication information indicates the first threshold.

19. The method according to claim 18, wherein the first indication information is carried in an operation, administration and maintenance configuration message, a system message, or a radio resource control message.

20. The method according to claim 18 or 19, wherein the method further comprises:
sending, by the network side device, second indication information to the terminal device, wherein the second indication information indicates the terminal device to preferentially record a master node random access report.

21. The method according to claim 20, wherein the second indication information is carried in the operation, administration and maintenance configuration message, the system message, or the radio resource control message.

22. The method according to any one of claims 18 to 21, wherein when the network side device is a master node, the method further comprises:
receiving, by the network side device, a random access report list from the terminal device, wherein the random access report list comprises one or more secondary node random access reports recorded by the terminal device, and a quantity of secondary node random access reports is less than or equal to the first threshold.

23. The method according to claim 22, wherein the random access report list further comprises one or more of the recorded secondary node random access reports, and a total quantity of secondary node random access reports comprised in the random access report list is less than or equal to the first threshold.

24. The method according to claim 22 or 23, wherein the random access report list further comprises the master node random access report, and a total quantity of master node random access reports and secondary node random access reports comprised in the random access report list is less than or equal to a second threshold; or a total quantity of master node random access reports comprised in the random access report list is less than or equal to a third threshold.

25. The method according to claim 24, wherein the second threshold is a total quantity of node random access reports that the terminal device is allowed to record, and the third threshold is a total quantity of master node random access reports that the terminal device is allowed to record.

26. A communication apparatus, wherein the apparatus comprises an obtaining module and a processing module, wherein
the obtaining module is configured to initiate a random access process to a cell managed by a secondary node, to obtain a first secondary node random access report; and
the processing module is configured to record the first secondary node random access report when a quantity of historical secondary node random access reports recorded by a terminal device is less than a first threshold.

27. The apparatus according to claim 26, wherein the processing module is further configured to:
send a random access report list to a master node, wherein the random access report list comprises the first secondary node random access report.

28. The apparatus according to claim 27, wherein the random access report list further comprises one or more of the recorded secondary node random access reports, and a total quantity of secondary node random access reports comprised in the random access report list is less than or equal to the first threshold.

29. The apparatus according to claim 27 or 28, wherein the random access report list further comprises a master node random access report, a total quantity of master node random access reports and secondary node random access reports comprised in the random access report list is less than or equal to a second threshold, and the second threshold is a total quantity of node random access reports that the terminal device is allowed to record; or a total quantity of master node random access reports comprised in the random access report list is less than or equal to a third threshold, and the third threshold is a total quantity of master node random access reports that the terminal device is allowed to record.

30. The apparatus according to any one of claims 27 to 29, wherein before sending the random access report list to the master node, the processing module is further configured to:
receive a random access report request message sent by the master node; or
determine that a total quantity of historical random access reports in the random access report list meets a second threshold, wherein the second threshold is the total quantity of node random access reports that the terminal device is allowed to record; or
reach a moment for periodically sending the random access report list to the master node.

31. The apparatus according to any one of claims 26 to 30, wherein the first threshold is predefined; or
the first threshold is indicated by first indication information received by the terminal device from a network side device, wherein the first indication information is carried in an operation, administration and maintenance configuration message, a system message, or a radio resource control message.

32. The apparatus according to any one of claims 26 to 31, wherein the obtaining module is further configured to:
initiate a random access process to a cell managed by the master node, to obtain a first master node random access report; and
the processing module is further configured to:
record the first master node random access report when a quantity of historical master node random access reports recorded by the terminal device is less than the third threshold, wherein the third threshold is predefined.

33. The apparatus according to any one of claims 26 to 31, wherein the obtaining module is further configured to:
initiate a random access process to a cell managed by the master node, to obtain a first master node random access report; and
the processing module is further configured to:
skip recording the first master node random access report when a quantity of historical master node random access reports recorded by the terminal device is equal to the third threshold, wherein the third threshold is predefined.

34. The apparatus according to any one of claims 26 to 31, wherein the obtaining module is further configured to:
initiate a random access process to a cell managed by the master node, to obtain a first master node random access report; and
the processing module is further configured to:
delete an earliest recorded historical master node random access report, and record the first master node random access report when a quantity of historical master node random access reports recorded by the terminal device is equal to the third threshold; or
randomly delete one recorded historical master node random access report, and record the first master node random access report when a quantity of historical master node random access reports recorded by the terminal device is equal to the third threshold.

35. The apparatus according to any one of claims 26 to 31, wherein the obtaining module is further configured to:
initiate a random access process to a cell managed by the master node, to obtain a first master node random access report; and
the processing module is further configured to:
record the first master node random access report when a sum of the quantity of historical secondary node random access reports and a quantity of historical master node random access reports recorded by the terminal device is less than the second threshold, wherein the second threshold is predefined.

36. The apparatus according to any one of claims 26 to 31, wherein the obtaining module is further configured to:
initiate a random access process to a cell managed by the master node, to obtain a first master node random access report; and
the processing module is further configured to:
delete an earliest recorded historical secondary node random access report, and record the first master node random access report when a sum of the quantity of historical secondary node random access reports and a quantity of historical master node random access reports recorded by the terminal device is equal to the second threshold; or
randomly delete one recorded historical secondary node random access report, and record the first master node random access report when a sum of the quantity of historical secondary node random access reports and a quantity of historical master node random access reports recorded by the terminal device is equal to the second threshold, wherein the second threshold is predefined.

37. The apparatus according to claim 36, wherein the processing module is further configured to:
receive second indication information sent by the network side device, wherein the second indication information indicates the terminal device to preferentially record the master node random access report.

38. The apparatus according to claim 37, wherein the second indication information is carried in the operation, administration and maintenance configuration message, the system message, or the radio resource control message.

39. The apparatus according to any one of claims 36 to 38, wherein the processing module is further configured to:
skip recording the first master node random access report when the quantity of historical secondary node random access reports is 0.

40. The apparatus according to any one of claims 36 to 38, wherein the processing module is further configured to:
delete an earliest recorded historical master node random access report, and record the first master node random access report when the quantity of historical secondary node random access reports is 0.

41. The apparatus according to any one of claims 26 to 40, wherein the processing module is further configured to:
delete the earliest recorded historical secondary node random access report, and record the first secondary node random access report when the quantity of historical secondary node random access reports is equal to the first threshold.

42. The apparatus according to any one of claims 26 to 40, wherein the processing module is further configured to:
skip recording the first secondary node random access report when the quantity of secondary node random access reports is equal to the first threshold.

43. A communication apparatus, wherein the apparatus comprises a processing module and a communication module, wherein
the processing module is configured to determine a first threshold, wherein the first threshold is a maximum quantity of secondary node random access reports that can be recorded by a terminal device; and
the communication module is configured to send first indication information to the terminal device, wherein the first indication information indicates the first threshold.

44. The apparatus according to claim 43, wherein the first indication information is carried in an operation, administration and maintenance configuration message, a system message, or a radio resource control message.

45. The apparatus according to claim 43 or 44, wherein the communication module is further configured to:
send second indication information to the terminal device, wherein the second indication information indicates the terminal device to preferentially record a master node random access report.

46. The apparatus according to claim 45, wherein the second indication information is carried in the operation, administration and maintenance configuration message, the system message, or the radio resource control message.

47. The apparatus according to claim 46, wherein when the communication apparatus is a master node, the communication module is further configured to:
receive a random access report list from the terminal device, wherein the random access report list comprises one or more secondary node random access reports recorded by the terminal device, and a quantity of secondary node random access reports is less than or equal to the first threshold.

48. The apparatus according to claim 47, wherein the random access report list further comprises one or more of the recorded secondary node random access reports, and a total quantity of secondary node random access reports comprised in the random access report list is less than or equal to the first threshold.

49. The apparatus according to claim 47 or 48, wherein the random access report list further comprises the master node random access report, and a total quantity of master node random access reports and secondary node random access reports comprised in the random access report list is less than or equal to a second threshold; or a total quantity of master node random access reports comprised in the random access report list is less than or equal to a third threshold.

50. The apparatus according to claim 49, wherein the second threshold is a total quantity of node random access reports that the terminal device is allowed to record, and the third threshold is a total quantity of master node random access reports that the terminal device is allowed to record.

51. A communication apparatus, comprising a processor and a recorder, wherein the recorder is configured to record one or more computer programs, the one or more computer programs comprise computer-executable instructions, and when the communication apparatus runs, the processor executes the one or more computer programs recorded by the recorder, to enable the communication apparatus to perform the method according to any one of claims 1 to 17 or the method according to any one of claims 18 to 25.

52. A communication system, comprising a terminal device and a secondary node, wherein the terminal device is configured to: initiate a random access process to a cell managed by the secondary node, to obtain a first secondary node random access report; and record the first secondary node random access report when a quantity of historical secondary node random access reports recorded by the terminal device is less than a first threshold, wherein the first threshold is a maximum quantity of secondary node random access reports that can be recorded by the terminal device.

53. The system according to claim 52, wherein the communication system further comprises a master node, wherein
the terminal device is further configured to: initiate a random access process to a cell managed by the master node, to obtain a first master node random access report; and
record the first master node random access report when a quantity of historical master node random access reports recorded by the terminal device is less than a third threshold, wherein the third threshold is predefined; or
skip recording the first master node random access report when a quantity of historical master node random access reports recorded by the terminal device is equal to a third threshold; or
delete, by the terminal device, an earliest recorded historical master node random access report, and record the first master node random access report when a quantity of historical master node random access reports recorded by the terminal device is equal to a third threshold; or
randomly delete, by the terminal device, one recorded historical master node random access report, and record the first master node random access report when a quantity of historical master node random access reports recorded by the terminal device is equal to a third threshold; or
record the first master node random access report when a sum of a quantity of historical secondary node random access reports and a quantity of historical master node random access reports recorded by the terminal device is less than a second threshold, wherein the second threshold is predefined; or
delete, by the terminal device, an earliest recorded historical secondary node random access report, and record the first master node random access report when a sum of a quantity of historical secondary node random access reports and a quantity of historical master node random access reports recorded by the terminal device is equal to a second threshold; or
randomly delete, by the terminal device, one recorded historical secondary node random access report, and record the first master node random access report when a sum of a quantity of historical secondary node random access reports and a quantity of historical master node random access reports recorded by the terminal device is equal to a second threshold.

54. A computer-readable recording medium, wherein the computer-readable recording medium is configured to record a computer program, and when the computer program is run on a computer, the computer is enabled to perform the method according to any one of claims 1 to 17 or the method according to any one of claims 18 to 25.

55. A computer program product, wherein the computer program product comprises a computer program, and when the computer program is run on a computer, the computer is enabled to perform the method according to any one of claims 1 to 17 or the method according to any one of claims 18 to 25.
